(19) Europäisches Patentamt

European Patent Office

Office européen des brevets

(11) **EP 2 227 093 B1**

(12) **EUROPEAN PATENT SPECIFICATION**

(45) Date of publication and mention of the grant of the patent:
**15.10.2014 Bulletin 2014/42**

(21) Application number: **08864073.5**

(22) Date of filing: **16.12.2008**

(51) Int Cl.:
*A23F 5/32* *(2006.01)*    *A23F 5/38* *(2006.01)*
*A23L 2/14* *(2006.01)*    *A23L 2/395* *(2006.01)*
*A23C 9/16* *(2006.01)*    *A23P 1/06* *(2006.01)*

(86) International application number:
**PCT/EP2008/067575**

(87) International publication number:
**WO 2009/080596 (02.07.2009 Gazette 2009/27)**

(54) **INSTANT BEVERAGE PRODUCT**

INSTANTGETRÄNKPRODUKT

PRODUIT DE BOISSON INSTANTANÉE

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **20.12.2007 US 15541**

(43) Date of publication of application:
**15.09.2010 Bulletin 2010/37**

(73) Proprietor: **Nestec S.A.**
**1800 Vevey (CH)**

(72) Inventors:
• **BOEHM, Robert Thomas**
**Marysville**
**OH 43040 (US)**
• **DONHOWE, Daniel Paul**
**Dublin**
**Ohio 43016 (US)**
• **MATHIAS, Patricia Ann**
**Dublin**
**OH 43017 (US)**

• **FU, Xiaoping**
**Dublin**
**OH 43016 (US)**
• **RECHTIENE, Joseph Bernard**
**Howell**
**New Jersey 07731 (US)**
• **KESSLER, Ulrich**
**CH-1073 Savigny (CH)**
• **SUDHARSAN, Mathalai Balan**
**CH-1004 Lausanne (CH)**

(74) Representative: **Lomholt, Stig Bredsted**
**Nestec S.A.**
**CT-IAM**
**Avenue Nestlé 55**
**1800 Vevey (CH)**

(56) References cited:
**WO-A-00/42831**    **WO-A-2006/005525**
**GB-A- 1 369 816**    **US-A- 3 592 659**
**US-A- 3 772 037**    **US-A- 4 351 849**

## Description

## Field of the invention

The present invention relates to a method for the production of instant coffee powders which, upon reconstitution with water, form a foamy upper surface. The method makes use of a porous base powder to which the present invention also relates.

## Background of the invention

In general, instant beverages are used to describe products such as tea, coffee or the like which are sold in a form that is easily reconstitutable with water to form a drink. Such beverages are typically in solid form and are readily soluble in hot water.

Instant soluble coffee is a phrase used to describe coffee which has been prepared by extraction of roast and ground coffee followed typically by reconstitution of the extract into a powdered product by conventional means such as freeze-drying, spray-drying or the like.

In order to prepare a beverage, hot water is then simply added to the powder thus avoiding the complicated and time-consuming process which is involved when preparing a beverage from traditional roast and ground coffee.

However, unlike coffee beverages prepared from roast and ground coffee, those prepared from instant soluble coffee do not usually exhibit a fine foam on their upper surface when reconstituted with hot water.

The foamed upper surface in beverages prepared from roast and ground coffee are typically associated with and caused, at least in part, by the machines which brew with pressurised water and/or steam.

This foam is known to positively affect the mouthfeel of the product when consumed and so is highly desired by many consumers. Furthermore, the foam acts to keep more of the volatile aromas within the beverage so that they can be appreciated by the consumer rather than lost to the surrounding environment.

Nevertheless, instant beverages such as instant soluble coffee are not suited for use with roast and ground coffee brewing apparatus and so the solution for foaming the beverage derived from roast and ground coffee is not readily applicable to instant beverages.

Instead, the foam must be generated by simple admixing of the instant beverage product and a liquid.

US-A-6,713,113 discloses a powdered soluble foaming ingredient which has a matrix containing a carbohydrate, a protein and entrapped pressurized gas. The gas is released upon addition of the dry powder to liquid.

US-A-4,830,869 and US-A-4, 903, 585, both to Wimmers, et al. disclose a method for making a coffee beverage having a thick layer of foamed coffee on its surface, similar in appearance to cappuccino coffee. A measured amount of spray-dried instant coffee and a small amount of cold water are combined with vigorous agitation to form a foamed coffee concentrate. Then, hot water is added to make a coffee beverage.

US-A-4,618,500 to Forquer discloses a method for preparing a brewed espresso-type coffee beverage which has froth on the surface of the beverage. Steam is injected into the brewed coffee beverage to produce the froth.

US-A-3,749,378 to Rhodes discloses an apparatus for foaming a coffee extract. Gas is introduced into the coffee extract and the foamed coffee is then spray-dried to make a soluble coffee product having a low bulk density.

A similar process is described in EP 0 839 457 B1 to Kraft Foods, whereby the soluble coffee powder is foamed by gas injection. The gas bubbles size is then reduced such that the final product will have gas bubbles of less than 10 micrometres.

Many instant foamed beverages are still lacking insofar as the foam initially produced is not conserved during consumption or the structure resembles a coarse foam rather than a fine and smooth (velvety) foam, ultimately desired by consumers. Alternatively or additionally, there may simply be insufficient foam produced.

It has now been found that powders with a certain microstructure enable the production of an instant beverage product which provides excellent foam and dissolution upon reconstitution in a liquid.

It has also been found that a process to produce a precursor with a certain microstructure and agglomeration of said precursor under specific conditions enables the production of an instant beverage product which provides excellent foam upon reconstitution with water.

Agglomeration of food products by sintering is known. For instance, US-A-6,497,911 to Niro, refers to a process of preparing a water soluble coffee or tea product using a non-rewetted particulate material obtained from an extract by drying. During the process, external compaction of the product is required resulting in a product which suffers from structural collapse of the internal pores.

US-A-5,089,279 to Conopco relates to a sintering process which is performed in a closed container so as not to lose humidity during sintering. This is suitable for confectionary, for instance, as it results in a sintered mass.

US-A-4,394,395 to Nestlé describes a process for manufacturing a food product where a powder is filled into moulds, lightly compressed and then heated to sinter the powder. This results in a moulded food product.

US 3,592,659 to General Foods Corporation describes a method of agglomerating frozen particles which can be used in the manufacture of instant coffee. Reconstitution of these agglomerates is however said to generate less foam than standard spray-dried coffee.

US 3,573,060 to Hills Bros. Coffee relates to a freeze-dried coffee extract which is highly porous and is produced by shock-freezing coffee extract droplets and then freeze-drying them.

DE 19750679 to Windhab et al. relates to water/oil or water/oil/water emulsions which are spray frozen and sintered in order to improve their storage at low temperature.

A process for spray-freezing liquid products such as milk, coffee, fruit juices is also described in US 3,670,520 to Bonteil et al.

A drying process whereby liquid substances such as fruit juice, pharmaceuticals, nutraceuticals, tea and coffee are spray freeze-dried is also described in WO2005/105253 to Agresearch Limited.

However, the above disclosures do not give a product having the desired porosity characteristics required for foaming upon reconstitution with water.

Furthermore, agglomeration using a sintering process is known to cause the partial or complete collapse of the microstructure (pores) in the product within which gas would be held. This problem needs to be addressed in order to provide a beverage having a desirable foamed upper surface.

Therefore, the present invention thus seeks to provide a beverage powder, which upon reconstitution yields a beverage with a desirable foamed upper surface.

**Summary of the invention**

The object of the invention is solved by the independent claims. The dependent claims further develop the central idea of the invention.

Thus, in a first aspect is provided a method for the preparation of an instant coffee powder comprising the steps of

a. Providing a porous base powder
b. Sintering the base powder at a temperature below 0°C to form a sintered cake
c. Grinding the sintered cake to provide a powder
d. Freeze-drying the powder to provide said instant coffee powder.

An instant coffee powder obtainable by said method is also part of the present invention.

In a further aspect, the present invention relates to an instant coffee powder obtainable by cold sintering a porous spray-frozen powder comprising a particle porosity of at least 35%, an ice crystal pore volume of less than 2.5 mL/g and an ice crystal pore size of less than 3 micrometres.

According to a further aspect of the invention, a sintered instant coffee powder having a foaming porosity of at least 35%, wherein the powder comprises ice sublimation voids is provided.

Similarly, a cold-sintered instant coffee powder comprising ice crystal sublimation voids throughout the volume of the powder particles is also part of the invention.

Another aspect of the invention concerns a method for the preparation of an instant beverage comprising the step of reconstituting an instant coffee powder according to the invention in a liquid.

**Brief description of the figures**

The present invention is further described hereinafter with reference to some of its embodiments shown in the accompanying drawings in which:

- Fig. 1 is a SEM (scanning electron micrograph) image of a sintered sample according to the invention, wherein the interparticle void (1), the cavity left by ice crystals after freeze-drying (2), and the gas pore formed during spray-drying (3) are apparent.

- Fig. 2 is a SEM image of a sintered granule wherein the agglomeration of base powder particles is apparent.

- Fig. 3 is a SEM image wherein the cavity left by ice crystals after freeze-drying (2), and the gas pore formed during spray-freezing (3) are apparent.

- Fig. 4 is a graph comparing the open pore volume of commercial freeze-dried coffee (FD) and of the product of the invention (PI).

- Fig. 5 is an SEM image of a freeze-dried spray-frozen powder according to the invention.

- Fig. 6 is a representation of the process for the production of spray-frozen particles according to the present invention, wherein 6.1 is typically a coffee liquor, 6.2 represents gas injection, 6.3 is mixing device, 6.4 is a heat exchanger, 6.5 is a pump, 6.6 shows the transport of the foamed liquor prior to spraying and 6.7 shows the spray freezing chamber.

- Fig. 7 is a schematic representation of a granule according to the present invention, which shows the granule (1) comprising closed pores (2), open pores with an opening diameter greater than 2 micrometres (3) and open pores with an opening diameter less than 2 micrometres (4).

- Fig. 8 is a description of the equipment used to measure the crema volume of the samples, wherein (8.1) is a plastic scale for reading the foam volume, (8.2) is a water reservoir, (8.3) is the lid of the reconstitution vessel, (8.4) is a connection valve, (8.5) is the reconstitution vessel and (8.6) is the release valve.

**Detailed description of the invention**

The present invention relates to the manufacture of instant coffee powder, which can be reconstituted by addition of liquid, e.g. hot water.

The present invention relates to instant coffee powders which deliver an excellent foamed upper surface (also called "crema") upon reconstitution with a liquid which confers to the product advantageous organoleptic properties.

In one embodiment of the invention, the instant coffee powder is in the form of granules. In the following the term "granule" is used to describe a powder which may be obtainable by agglomeration of smaller powder particles. The granules thus comprise smaller constitutive powder particles. These smaller constitutive powder particles may be partially fused to form the bigger granules.

In the present application, the term "powder" is used interchangeably with "granules" and is used to define the sintered instant beverage powders of the present invention and the finer powders which are used in the production of said sintered powders. Which definition is to be understood is clear from the context.

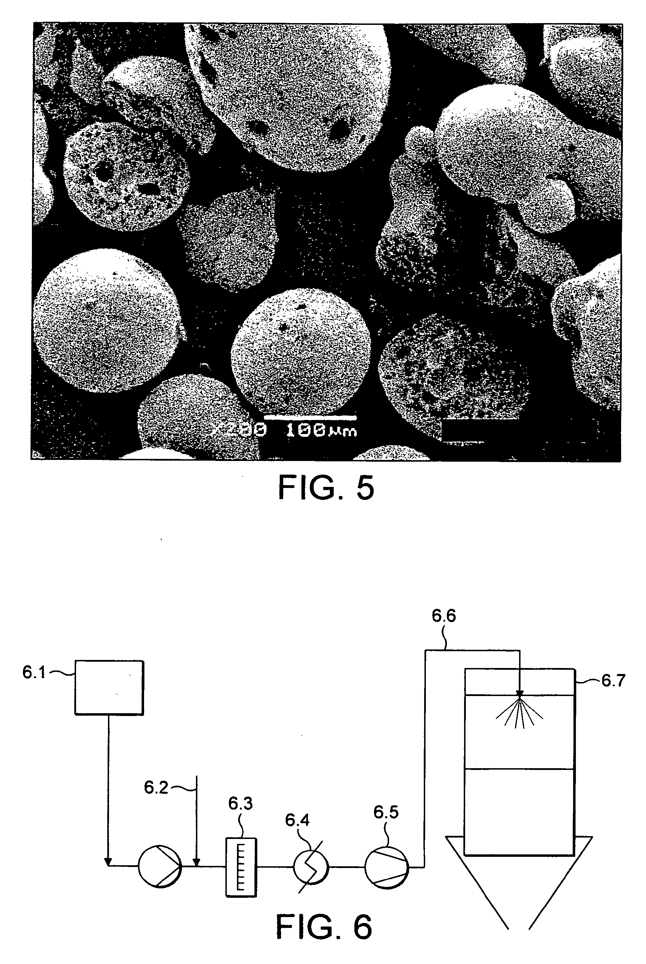

Thus, the present invention relates to a method for the manufacture of instant coffee powder which comprises, in a first step, the provision of a porous base powder. Preferably, the porous base powder is a spray-frozen powder. Such a powder is illustrated in Fig. 5.

Spray-freezing is a technology which has been known for many years. It consists in spraying a liquid into droplets and simultaneously freezing said droplets.

In the present invention, the spray-freezing may be carried out according to a process schematised in Fig. 6. The liquid to be spray-frozen is a coffee extract (6.1). The coffee extract preferably comprises a solids content above 40%, more preferably above 50%. The coffee extract is firstly subjected to the addition of a gas (6.2), preferably nitrogen, by the means of a sparging device distributing the nitrogen homogeneously. The gas may be added before or after the high pressure pump. Preferably, a mixing device (6.3) is used in order to ensure a homogeneous dispersion of the gas bubbles. In a preferred embodiment, a heat exchanger (6.4) is used in order to cool the foamed extract after gas injection. The temperature of the extract should be brought to between 0 and 60°C, preferably between 0 to 30°C, such as between 10 and 25°C or between 15 and 30°C. The foamed extract then enters a high pressure pump (6.5) or homogeniser. Thus, the pressure of the extract may be increased to 65 to 400 bar, preferably 85 to 250 bar. The foamed extract (6.6) is then pumped to the top of a spray-freezing tower (6.7), where the extract is atomised. The known spray-freezing process may be carried out by means of direct or indirect contact with cryogenic fluids such as liquid nitrogen, cold air, and liquid carbon dioxide.

This process results in a porous spray-frozen powder which can be used as a basis for the manufacture of instant beverage granules according to the present invention. Alternatively, the spray-frozen powder may be directly freeze-dried to yield a porous particulate powder which may be used in instant beverage applications, for example as an instant beverage powder.

The porous spray-frozen powder of the present invention comprises a particle porosity of at least 35%, an ice crystal pore volume of less than 2.5mL/g, preferably less than 2.0 mL/g, and an ice crystal pore size of less than 3 micrometres, preferably between 0.1 and 3 micrometres. Preferably, the particle porosity is between 35% and 85%, more preferably between 45% and 70%.

Porosity of the particles may be determined by techniques known to the skilled person such as mercury porosimetry, etc. Similarly ice crystal pore volume and ice crystal pore size may be measured by mercury porosimetry and SEM.

Preferably, the spray-frozen powder comprises an average pore size diameter $D_{50}$ of less than 40 micrometres, preferably less than 25 micrometres.

The pore size distribution of the spray-frozen powder of the invention may be characterised by a distribution span factor of less than 4, preferably less than 3, more preferably less than 2, most preferably less than 1. The distribution span factor is obtained by X-ray tomography. The span of the distribution is calculated by the following equation:

$$\mathrm{Span} \; = \; \frac{D_{90} - D_{10}}{D_{50}}$$

wherein $D_{90}$, $D_{10}$ and $D_{50}$ represent respectively the equivalent pore size comprising 90%, 10% and 50% of the above mentioned pore size distribution. The pore size distribution is based on the void volume distribution. Thus, the lower the span factor, the more narrow and homogeneous the distribution of the pores.

The porous spray-frozen powder of the invention is further characterised by a tapped density between 150-650g/L. The porous spray-frozen base powder preferable has a particle size ($D_{50}$) between 50 and 300 micrometres, more preferably between 100 and 200 micrometres.

The porous base powder is then used in a further sintering step according to the method of the present invention. Sintering is carried out at a temperature below 0°C to form a sintered cake.

According to an embodiment, the porous base powder, which is preferably spray-frozen, is maintained at a temperature below 0°C prior to sintering. Preferably, it is maintained at a temperature below -15°C, more preferably below -30°C. It is then transferred to a conveyer belt which passes through a sintering zone. Ideally, the base powder is conveyed in a continuous fashion into a feeder/distributor from which it is distributed onto the conveyer belt. The conveyer belt thus transports a bed of base powder particles loosely packed together. Preferably, no compaction of the bed is carried out prior to sintering.

The temperature of the sintering zone is below 0°C, preferably between -10 and -30°C. Preferably, the temperature of the sintering zone is higher than the temperature of the porous particles. The residence time in the sintering zone may be less than four hours, preferably less than one hour.

The base powder particles, when entering the sintering zone, are heated to a temperature above their glass transition, at which point they begin to fuse together. The degree of sintering, or fusion, increases with the residence time and temperature within the sintering zone. It is preferable to control the sintering to the point at which the particles are sufficiently fused together to maintain a strong enough product texture, but not oversintered at which point the internal microstructure collapses and the gas volume (responsible for crema formation) is lost. As the particles fuse together and collapse, the volume of the interparticle voids in the final product (i.e. the void space between individual base powder particles) begins to decrease, which inhibits dissolution in the final product.

After sintering, the sintered cake is preferably passed through a cooling zone. The cooling zone is at a temperature below the sintering zone temperature. Typically the cooling zone is at a temperature below-10°C, preferably below -20°C, more preferably below -30°C.

Upon grinding, the sintered cake is formed into granules, typically having a size greater than 0.5mm, preferably less than 4mm.

After grinding, the granules are freeze-dried using standard methods. The moisture content of the granules after freeze-drying is typically 0.5-5%, such as 0.5-4%.

In an embodiment of the invention, all steps of the method may be carried out in a cold room environment at below 0°C, preferably below -15°C, more preferably below -30°C.

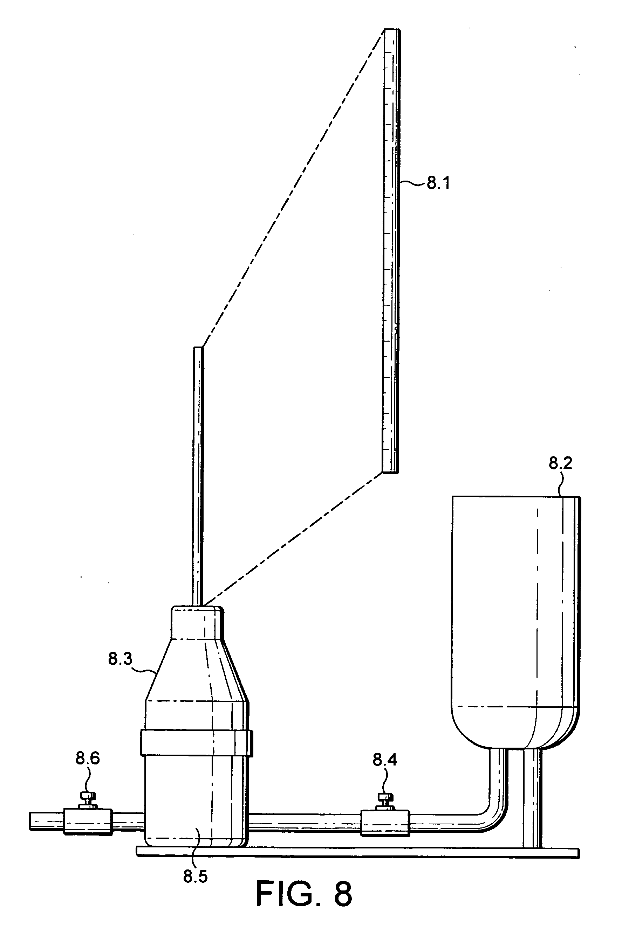

The final instant beverage granules may resemble a typical freeze-dried coffee texture. However, upon reconstitution in liquid, typically hot water, the present granules exhibit a crema volume superior to known products. For instance, 5g of the present granules reconstituted in 200mL of water provides a crema volume of at least 3mL. The amount of crema produced can be measured with a simple device (Figure 8) consisting of a reconstitution vessel connected to a water reservoir, which is initially blocked off with a valve. After reconstituting, the reconstitution vessel is closed with a special lid that ends in a scaled capillary. The valve between the reconstitution vessel and the water reservoir is then opened and the water (standard tap water of any temperature) pushes the reconstituted beverage upwards into the capillary, thus facilitating the reading of the crema volume.

The instant coffee powder obtained by the present method may be mixed with any other ingredient suitable for inclusion into a beverage, e.g. the coffee powder of the invention may be mixed with a creamer and/or a sweetener to produce a coffee mix suitable for preparing e.g. café latte, cappuccino or the like.

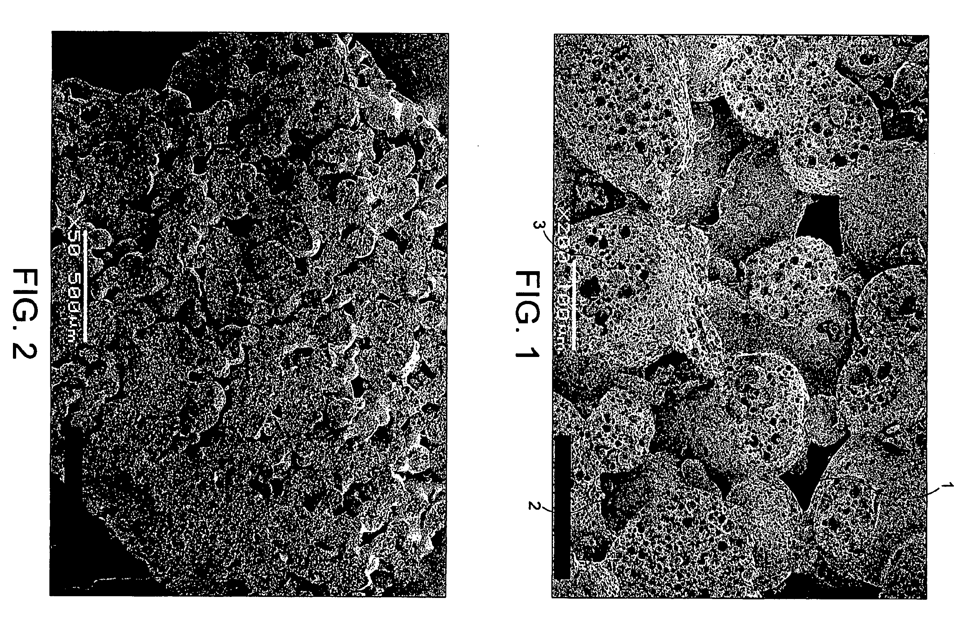

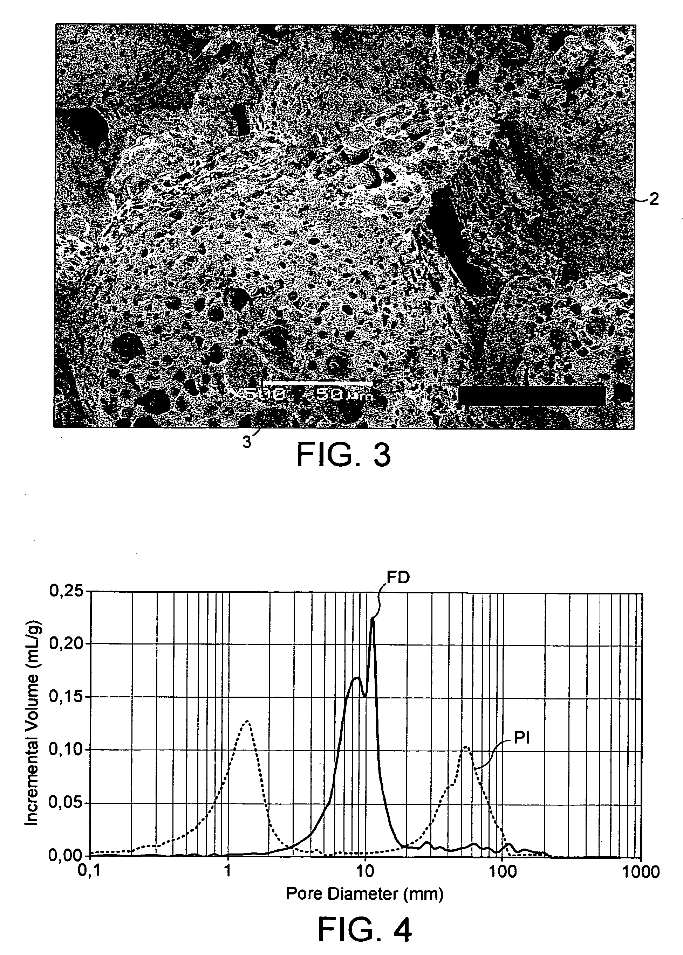

Sintered granules of the present invention are represented in figures 1 to 3. Figure 2 represents a granule according to the present invention wherein the initial powder particles are discernible. Figure 1 is a magnified SEM image showing the interparticle voids (1) between the base powder particles, the ice crystal sublimation voids (2) occurring upon freeze-drying and the closed pores (3) resulting from the initial base powder porosity. These are also clear from figure 3 which is a further magnified SEM image of the present granules.

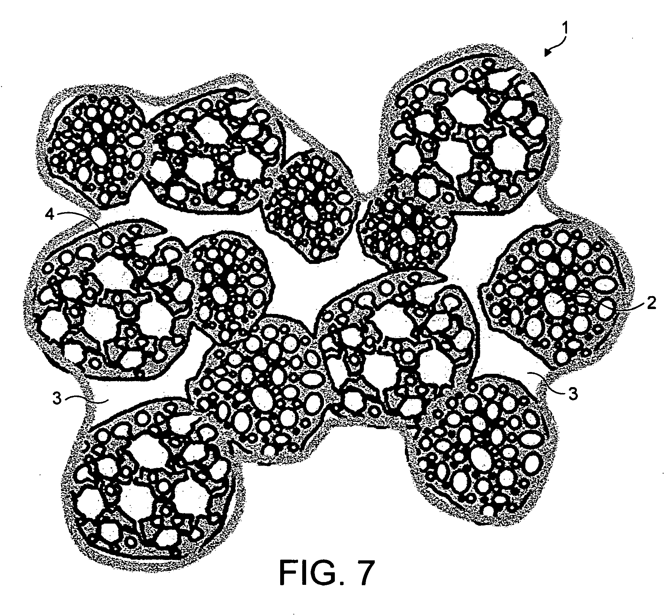

Referring to figure 7, it can be seen that the granules of the present invention (1) comprise closed pores (2), open pores with an opening diameter of less than 2 micrometres (4) and open pores with an opening greater than 2 micrometres (3). Furthermore, the granules of the present invention also comprise ice sublimation voids which are the result of freeze-drying a cold sintered cake.

Upon reconstitution in a liquid, the granules of the invention produce foam. The granules of the invention may thus be further defined by their foaming porosity.

Foaming porosity is a measure of the porosity which contributes to foaming and characterises the potential foaming ability of the powder of the invention. Indeed, open pores (3) will not contribute to the foaming as much, or even in some cases not at all compared to closed pores (2). Pores with opening diameter of less than 2 micrometres (4) may also contribute to foam since the capillary pressure in these pores is greater than the ambient pressure and this may enable foam formation. In the present invention, the foaming porosity is obtained by including closed pores (2) and open pores having an opening diameter of less than 2 micrometres (4).

Thus, for the purpose of measuring the foaming porosity, only closed pores (2) as well as open pores (4) having an opening diameter of less than 2 micrometres are taken into account as these are considered to contribute to foaming. The foaming porosity is obtained by the ratio of the volume of pores contributing to foaming over the volume of the aggregate excluding the volume of open pores having an opening diameter above 2 micrometres. This can be measured by mercury porosimetry or X-ray tomography.

The foaming porosity of the present sintered powders, similarly to the porous powders prior to sintering, is at least 35%, such as at least 40% or at least 50%. Preferably, the foaming porosity is between 35 and 85%, more preferably between 40 and 80%, even more preferably between 40 and 75%, even more preferably between 45 and 70%, most preferably between 45 and 65%.

Thus, a sintered instant beverage powder having a foaming porosity of at least 35%, wherein the powder comprises ice sublimation voids is part of the present invention. Similarly to the porous spray-frozen powder, the sintered powder preferably has an ice crystal pore volume of less than 2.5mL/g, preferably less than 2.0mL/g.

The ice sublimation voids present in the sintered powders have a dimension of less than 3 micrometres, preferably between 0.1 and 3 micrometres.

According to the invention, the sintered powders have an average closed pore diameter $D_{50}$ of less than 80 micrometres. Preferably the pores have an average diameter $D_{50}$ of less than 60 micrometres, more preferably less than 50 micrometres, even more preferably less than 40 micrometres, even more preferably less than 30 micrometres, most preferably less than 25 micrometres. The pore size distribution is based on the void space distribution.

Another characteristic of the sintered powders of the invention is their open pores (3). These open pores form the channels for liquid penetration into the powders of the invention. The larger the volume and size of the open pores, the higher the liquid penetration and the better the dissolution. Thus, the powders of the invention may be characterised by their "open pore volume" which provides an estimation of the ability to dissolve the powder of the invention. In order to measure the open pore volume per gram of powder, the volume of the interstices having an opening diameter between 1 and 500 micrometres is taken into account. This can be measured by mercury porosimetry.

The present sintered powders are characterised by an open pore volume of less than 3mL/g. Preferably, the open pore volume is between 0.5 and 2.5mL/g, more preferably between 0.7 and 2.0mL/g.

It has also been found by the present invention that another factor influencing the dissolution and the foam volumes obtained upon reconstitution is the size distribution of the pores, i.e. of the internal voids (2) and the open pores having an opening of less than 2 micrometres (4).

The pore size distribution of the sintered powders may be characterised by a distribution span factor n of less than 4, preferably less than 3, more preferably less than 2, most preferably less than 1. The distribution span factor is obtained by X-ray tomography as described above in relation to the porous powders used in the sintering process.

The sintered beverage powder preferably has a tapped density between 100-300g/L.

The present invention also provides a cold-sintered instant coffee powder comprising ice crystal sublimation voids throughout the volume of the powder particles.

The present sintered powders may be distinguished from regular freeze-dried powders by their pore diameter distribution. Indeed Fig. 4 shows the pore size distribution of commercial freeze dried coffee (FD). The pores with size from 1 to 40 micrometres are formed by ice crystal sublimation.

For the product of invention (PI) coffee has a pore size distribution where two peaks are apparent. The pores with sizes less than 3 micrometres are formed by ice crystal sublimation. The pores with sizes from 10 to 500 micrometres are formed during sintering process, due to interparticle packing or interparticle voids.

A method for the preparation of an instant beverage comprising the step of reconstituting a sintered instant coffee powder as described above in a liquid also falls under the present invention.

The beverage is preferably a coffee, or a coffee with chicory, cereal, dairy or non-dairy creamer, a cocoa, a chocolate or a malted beverage. Most preferably, the liquid used to reconstitute the present granules is hot water, but it may also be milk, juice, cold water etc. depending on the desired final beverage.

The present invention is further illustrated by means of the following non-limiting examples.

**Examples**

**Example 1**

**Mercury porosimetry to evaluate foaming porosity, particle porosity and open pore volume of a sintered powder according to the present invention**

AutoPore IV 9520 is used for the structure evaluation (Micromeritics Inc. Norcrose, GA, USA). The operation pressure for Hg intrusion was from 0.4 psia to 9000 psia (with low pressure from 0.4psia to 40psia and high pressure port from 20 to 9000 pisa). The pore diameter under this pressure is ranged from 500 to 0.01 um. The data reported in this note will be pore volume (ml/g) at different pore diameter (um).

About 0.1 to 0.4 g of sample is precisely weighted and packed in a penetrometer (volume 3.5 ml, neck or capillary stem diameter 0.3 mm and stem volume of 0.5 ml).

After the penetrometer is inserted to the lower pressure port, sample is evacuated at 1.1 psia/min, then switch to a medium rate at 0.5 pisa and a fast rate at 900 $\mu$m Hg. The evacuating target is 60 $\mu$m Hg. After reaching the target, the evacuation is continued for 5 min before Hg is filled in.

The measurement is conducted in set-time equilibration. That is, the pressure points at which data are to be taken and the elapsed time at that pressure in the set-time equilibration (10 sec) mode. Roughly 140 data points are collected at the pressure ranges.

The bulk volume of the granulate is obtained from the initial volume of mercury and the sample holder. The volume of the open pores with opening diameter greater than 2 micrometers (3) is obtained after intrusion with mercury up to a diameter of 2 micrometer. Subtraction of this volume from the bulk volume of the granulate gives the new volume of the granulate which comprises the closed pores (2), open pores with opening diameters less than 2 micrometers (4) and the volume of the coffee matrix. The volume of the closed pores, open pores with opening larger than 2 micrometers in the granulate is obtained by subtracting the volume of the coffee matrix from the new volume of the granulate. The volume of the coffee matrix is obtained from the weight of the sample and coffee matrix density. The foaming porosity is the ratio of the volume of closed pores and open pores having an opening diameter of less than 2 micrometer over the new volume of the granulate.

The particle porosity of the precursor powder may be measured using the method as described in US 60/976,229.

The volume of open pores per gram of product in the diameter range 1 to 500 micrometres gives the "open pore volume".

## Determination of the internal structure of coffee particles by microcomputed X-ray tomography

X-ray tomography scans are performed with a 1172 Skyscan MCT (Antwerpen, Belgium) with a X-ray beam of 80kV and 100uA. Scans are performed with the Skyscan software (version 1.5 (build 0) A (Hamamatsu 10Mp camera), reconstruction with the Skyscan recon software (version 1.4.4) and 3D image analysis with CTAn software (version 1.7.0.3, 64-bit).

To obtain a pixel size of 1um, the camera is set up at 4000x2096 pixels and samples were placed in the Far position. Exposure time is 2356 ms. Scan is performed over 180°, the rotation step is 0.3° and the frame averaging is 4.

The reconstruction of the dataset is performed over 800 slices in average, with the settings contrast at 0-0.25. Smoothing and ring artefact reduction are set up at 1 and 10, respectively.

3D image analyses are performed on the 1 um per pixel datasets. The analysis is performed in two steps: a first step to select the region of interest in the granulate to be analysed by excluding the open pores with opening greater than 2 micrometers, the second step to obtain the distribution of the porosity in the selected region of interest. The foaming porosity value obtained by this technique matches closely that obtained by mercury porosimetry.

## Selection of volume of interest

The images of 1um per pixel resolution are segmented at 30-255, cleaned by removing any single spots smaller than 16 pixels, and then dilated by mathematical morphology (radius of 3 pixels). The selection of the volume of interest is performed through the shrink-wrap function, and then this volume is eroded by mathematical morphology (radius of 3 pixels) to adjust to the surface of the particles.

## Void space distribution in the region of interest:

The images are reloaded and segmented at 40-255. The foaming porosity is then calculated as the ratio of the volume of pores out of the volume of region of interest. The structure separation gives the pores size distribution.

The volume of open pores per gram of product in the diameter range less than 3 micrometres gives volume opened up by the ice crystal. This is referred to as the ice crystals pore volume. A preferential range between 0.1 and 3 micrometers may also be considered.

## Example 2a - preparation of the porous base powder

1. Nitrogen gas was added to concentrated coffee comprised of an 85% Arabica/15% Robusta blend, with solids content above of 55% by means of a sparging device distributing the nitrogen homogenously.
2. The nitrogen addition rate was 2.2 litres of nitrogen per kg of coffee solid.
3. The gas/extract mixture was passed through a high-shear mixer to ensure a homogeneous dispersion of nitrogen bubbles as well as a reduction in the bubble size.
4. The foamed extract immediately passed through a heat exchanger to cool the extract down to approximately 27°C.
5. The foamed extract then entered a high pressure pump and was compressed to 135 bar.
6. The extract was atomised at 135 bar with a single fluid swirl nozzle.
7. The frozen base powder was used to produce a freeze dried product with a porous structure.

The dried base powder produced a crema volume of 7.5 ml. The dried base powder had a $D_{50}$ particle size of 218 microns and a tapped density of 334 g/L.

## Example 2b - preparation of a porous base powder

1. Nitrogen gas was added to concentrated coffee comprised of a 90% Arabica/10% Robusta blend, with solids content above 55% by means of a sparging device distributing the nitrogen homogeously.
2. The nitrogen addition rate was 2.2 liters of nitrogen per kg of coffee solid.
3. The gas/extract mixture was passed through a high-shear mixer to ensure a homogeneous dispersion of nitrogen bubbles as well as a reduction in the bubble size.
4. The foamed extract immediately passed through a heat exchanger to cool the extract down to approximately 27°C.
5. The foamed extract then entered a high pressure pump and was compressed to 100 bar.
7. The extract was atomised at 100 bar with a single fluid swirl nozzle.
8. The frozen base powder was used to produce a freeze dried product with a porous structure.

The dried base powder produced a crema volume of 6.1 ml. The dried base powder had a $D_{50}$ particle size of 226micron and a tapped density of 481 g/L.

**Example 2c - preparation of a porous base powder**

1. Nitrogen gas was added to concentrated coffee comprised of an 85% Arabica/15% Robusta blend, with solids content above of 52% by means of a sparging device distributing the nitrogen homogeneously.
2. The nitrogen addition rate was 2.9 litres of nitrogen per kg of coffee solid.
3. The gas/extract mixture was passed through a high-shear mixer to ensure a homogeneous dispersion of nitrogen bubbles as well as a reduction in the bubble size.
4. The foamed extract immediately passed through a heat exchanger to cool the extract down to approximately 36°C.
5. The foamed extract then entered a high pressure pump and was compressed to 135 bar.
7. The extract was atomised at 135 bar with a single fluid swirl nozzle.
8. The frozen base powder was used to produce a freeze dried product with a porous structure.

The dried base powder produced a crema volume of 6.8 ml. The dried base powder had a $D_{50}$ particle size of 177 micron and a tapped density of 545 g/L.

**Example 2d - preparation of a porous base powder**

1. Nitrogen gas was added to coffee liquor comprised of an 85% Arabica/15% Robusta blend using extraction method A, with solids content above of 59% by the means of a sparging device distributing the nitrogen homogenously.
2. The nitrogen addition rate was 2.2 litres of nitrogen per kg of coffee solid.
3. The gas/extract mixture was passed through a high-shear mixer to ensure a homogeneous dispersion of nitrogen bubbles as well as a reduction in the bubble size.
4. The foamed extract immediately passed through a heat exchanger to cool the extract down to approximately 38°C.
5. The foamed extract then entered a high pressure pump and was compressed to 155 bar.
7. The extract was atomised at 155 bar with a single fluid swirl nozzle.
8. The frozen base powder was used to produce a freeze dried product with a porous structure.

The dried base powder produced a crema volume of 7.2 ml. The dried base powder had a $D_{50}$ particle size of 113 micron and a tapped density of 557 g/L.

**Example 3a - preparation of instant beverage granules**

A (porous spray-frozen powder) precursor was formed into thin cakes using a manual preparation method, that is, hand filling the precursor into a rectangular pan of dimensions 410mm x 610mm x 20mm.
The cakes were manually transferred onto the stainless steel sintering belt located in a -40°C ambient environment.
The cakes on the belt were conveyed into the heated sintering zone with air temperature of -14°C for a residence time of 18 minutes.
After sintering, the cakes entered the cooling zone, were removed from the belt, and subsequently ground to form a freeze-dried looking texture, of particle size range from 0.6 to 3.2 mm.
All the above steps took place in the -40°C cold room environment.
After texturising, the ground frozen product was freeze-dried in a batch vacuum chamber to produce the final dried product. The final moisture content of the dried product was 1.9%.
The final product had the following properties:

a. Tapped density = 195 g/L
b. Crema volume = 4.1 mL

**Example 3b- preparation of instant beverage granules**

A (porous spray-frozen powder) precursor produced by Example 2b was distributed into a continuous bed on a stainless steel conveyor belt in a -40C ambient environment. The bed depth was approximately 10 mm.
The bed was conveyed into the heated sintering zone with air temperature of -11°C for a residence time of 20 minutes.
After sintering, the bed entered the cooling zone and was subsequently ground to form a freeze-dried looking texture of particle size range from 0.6 to 3.2 mm.
All the above steps took place in the -40°C cold room environment.
After texturising, the ground frozen product was freeze-dried in a batch vacuum chamber to produce the final dried product.
The final moisture content of the dried product was 0.6%.
The final product had the following properties:

a. Tapped density = 232 g/L
b. Crema volume = 6.9 mL

## Claims

1. Method for the preparation of an instant coffee powder comprising the steps of

   a. Providing a porous base powder
   b. Sintering the base powder at a temperature below 0°C to form a sintered cake, wherein the temperature of the sintering zone is higher than the temperature of the porous base powder
   c. Grinding the sintered cake to provide a powder
   d. Freeze-drying the powder to provide said instant coffee powder.

2. Method according to claim 1, wherein the instant coffee powder is in the form of granules.

3. Method according to claims 1 or 2, wherein the base powder is spray-frozen.

4. Method according to any of the preceding claims, wherein the porous base powder has a particle porosity of at least 35%.

5. Method according to any of claims 2 to 4, wherein the porous base powder has an ice crystal pore volume of less than 2.5 mL/g, preferably less than 2.0 mL/g and an ice crystal pore size of less than 3 micrometres, preferably between 0.1 and 3 micrometres.

6. Method according to any of the preceding claims, wherein the porous base powder is maintained at a temperature of below 0°C prior to sintering.

7. Method according to any of the preceding claims, wherein the sintering is carried out in a sintering zone through which a conveyer belt carrying the base powder runs.

8. Method according to claim 7, wherein the sintering zone is at a temperature above -30°C, preferably above -20°C.

9. Method according to any of the preceding claims, wherein the sintered cake is passed through a cooling zone prior to grinding.

10. Method according to claim 9, wherein the cooling zone is at a temperature below the sintering zone temperature.

11. Method according to claim 10, wherein the cooling zone is at a temperature below -10°C, preferably below -20°C, more preferably below -30°C.

12. Method according to any of the preceding claims, wherein the instant coffee powder has particles having a size greater than 0.5mm, preferably less than 4mm.

13. Method according to any of the preceding claims, wherein the moisture content of the instant coffee powder after freeze-drying is 0.5-5%.

14. Method according to any of the preceding claims, wherein all steps are carried out in a cold room environment at below 0°C.

15. Instant coffee powder obtainable by a method according to any of the preceding claims.

16. Instant coffee powder obtainable by cold sintering a porous spray-frozen powder of a coffee extract comprising a particle porosity of at least 35%, an ice crystal pore volume of less than 2.5 mL/g and an ice crystal pore size of less than 3 micrometres.

17. Sintered instant coffee powder having a foaming porosity of at least 35%, wherein the powder comprises ice sublimation voids.

18. Instant coffee powder powder according to claim 17, which has an ice crystal pore volume of less than 2.5 mL/g, preferably less than 2.0 mL/g.

19. Instant coffee powder according to claims 17 or 18, wherein the ice sublimation voids have a dimension of less than 3 micrometres, preferably between 0.1 and 3 micrometres.

20. Instant coffee powder according to any of claims 17 to 19, which comprises an average pore size diameter of less than 40 micrometres, preferably less than 25 micrometres.

21. Instant coffee powder according to any of claims 17 to 20, having an open pore volume between 0.5-2.5mL/g, preferably between 0.7-2.0 mL/g.

22. Instant coffee powder according to any of claims 17 to 21, which comprises a distribution span factor n of less than 4, preferably less than 1.

23. Instant coffee powder according to any of claims 17 to 22, having a tapped density between 100-300 g/L.

24. Cold-sintered instant coffee powder comprising ice crystal sublimation voids throughout the volume of the powder particles.

25. Method for the preparation of an instant beverage comprising the step of reconstituting an instant coffee powder according to any of claims 15 or 17 to 24 in a liquid.

26. Method according to claim 25, wherein the liquid is hot water.

27. Method according to any of claims 25 or 26, wherein at least 3mL of crema are produced upon reconstitution in a liquid.

**Patentansprüche**

1. Verfahren für die Zubereitung eines Instant-Kaffeepulvers mit den folgenden Schritten:

a. Bereitstellen eines porösen Basispulvers
b. Sintern des Basispulvers bei einer Temperatur unter 0°C, um einen Sinterkuchen zu bilden, wobei die Temperatur der Sinterungszone höher ist als die Temperatur des porösen Basispulvers
c. Vermahlen des Sinterkuchens, um ein Pulver herzustellen
d. Gefriertrocknen des Pulvers, um das Instant-Kaffeepulver herzustellen.

2. Verfahren nach Anspruch 1, wobei das Instant-Kaffeepulver die Form von Granulat hat.

3. Verfahren nach Anspruch 1 oder 2, wobei das Basispulver sprühgefroren ist.

4. Verfahren nach einem der vorhergehenden Ansprüche, wobei das poröse Basispulver eine Partikelporosität von mindestens 35% besitzt.

5. Verfahren nach einem der Ansprüche 2 bis 4, wobei das poröse Basispulver ein Eiskristall-Porenvolumen von weniger als 2,5 mL/g, vorzugsweise weniger als 2,0 mL/g, und eine Eiskristall-Porengröße von weniger als 3 Mikrometern, vorzugsweise zwischen 0,1 und 3 Mikrometern, hat.

6. Verfahren nach einem der vorhergehenden Ansprüche, wobei das poröse Basispulver vor dem Sintern bei einer Temperatur von unter 0°C gehalten wird.

7. Verfahren nach einem der vorhergehenden Ansprüche, wobei das Sintern in einer Sinterungszone durchgeführt wird, durch die ein Transportband mit dem Basispulver läuft.

8. Verfahren nach Anspruch 7, wobei die Sinterungszone bei einer Temperatur über -30°C, vorzugsweise über -20°C, liegt.

9. Verfahren nach einem der vorhergehenden Ansprüche, wobei der Sinterkuchen vor dem Vermahlen durch eine Kühlzone geführt wird.

10. Verfahren nach Anspruch 9, wobei die Kühlzone bei einer Temperatur unter der Sinterungszonentemperatur liegt.

11. Verfahren nach Anspruch 10, wobei die Kühlzone bei einer Temperatur unter -10°C, vorzugsweise unter -20°, weiter bevorzugt unter -30°C, liegt.

12. Verfahren nach einem der vorhergehenden Ansprüche, wobei das Instant-Kaffeepulver Partikel mit einer Größe von mehr als 0,5 mm, vorzugsweise weniger als 4 mm, hat.

13. Verfahren nach einem der vorhergehenden Ansprüche, wobei der Feuchtigkeitsgehalt des Instant-Kaffeepulvers nach dem Gefriertrocknen 0,5-5% beträgt.

14. Verfahren nach einem der vorhergehenden Ansprüche, wobei alle Schritte in einer Kühlraumumgebung bei unter 0°C durchgeführt werden.

15. Instant-Kaffeepulver, das man durch ein Verfahren nach einem der vorhergehenden Ansprüche gewinnen kann.

16. Instant-Kaffeepulver, das man durch Kaltsinterung eines porösen, sprühgefrorenen Pulvers eines Kaffeeextraktes mit einer Partikelporosität von mindestens 35%, einem Eiskristall-Porenvolumen von weniger als 2,5 mL/g und einer Eiskristall-Porengröße von weniger als 3 Mikrometern gewinnen kann.

17. Gesintertes Instant-Kaffeepulver mit einer Schaumporosität von mindestens 35%, wobei das Pulver Eis-Sublimationshohlräume aufweist.

18. Instant-Kaffeepulver nach Anspruch 17, das ein Eiskristall-Porenvolumen von weniger als 2,5 mL/g, vorzugsweise weniger als 2,0 mL/g, aufweist.

19. Instant-Kaffeepulver nach Anspruch 17 oder 18, wobei die Eis-Sublimationshohlräume eine Abmessung von weniger als 3 Mikrometern, vorzugsweise zwischen 0,1 und 3 Mikrometern, haben.

20. Instant-Kaffeepulver nach einem der Ansprüche 17 bis 19, das einen durchschnittlichen Porengrößendurchmesser von weniger als 40 Mikrometern, vorzugsweise weniger als 25 Mikrometern, aufweist.

21. Instant-Kaffeepulver nach einem der Ansprüche 17 bis 20, das ein offenes Porenvolumen zwischen 0,5-2,5 mL/g, vorzugsweise zwischen 0,7-2,0 mL/g, besitzt.

22. Instant-Kaffeepulver nach einem der Ansprüche 17 bis 21, das einen Verteilungsspannfaktor n von weniger als 4, vorzugsweise weniger als 1, aufweist.

**23.** Instant-Kaffeepulver nach einem der Ansprüche 17 bis 22 mit einer Stampfdichte zwischen 100-300 g/L.

**24.** Kaltgesintertes Kaffeepulver mit Eiskristalll-Sublimationshohlräumen durch das Volumen der Pulverpartikel hindurch.

**25.** Verfahren für die Zubereitung eines Instantgetränks mit dem Schritt des Rekonstituierens eines Instant-Kaffeepulvers nach einem der Ansprüche 15 oder 17 bis 24 in einer Flüssigkeit.

**26.** Verfahren nach Anspruch 25, wobei die Flüssigkeit heißes Wasser ist.

**27.** Verfahren nach einem der Ansprüche 25 oder 26, wobei mindestens 3 mL Crema bei Rekonstitution in einer Flüssigkeit hergestellt werden.

**Revendications**

**1.** Procédé pour la préparation d'une poudre de café instantané comprenant les étapes consistant à :

a. fournir une poudre de base poreuse
b. fritter la poudre de base à une température inférieure à 0°C afin de former un gâteau fritté, dans lequel la température de la zone de frittage est supérieure à la température de la poudre de base poreuse
c. pulvériser le gâteau fritté afin de fournir une poudre
d. lyophiliser la poudre afin de fournir ladite poudre de café instantané.

**2.** Procédé selon la revendication 1, dans lequel la poudre de café instantané est sous la forme de granules.

**3.** Procédé selon les revendications 1 ou 2, dans lequel la poudre de base est congelée par pulvérisation.

**4.** Procédé selon l'une quelconque des revendications précédentes, dans lequel la poudre de base poreuse présente une porosité de particule d'au moins 35%.

**5.** Procédé selon l'une quelconque des revendications 2 à 4, dans lequel la poudre de base poreuse présente un volume de pore de cristaux de glace inférieur à 2,5 mL/g, de préférence inférieur à 2,0 mL/g et une taille de pore de cristaux de glace inférieure à 3 micromètres, de préférence entre 0,1 et 3 micromètres.

**6.** Procédé selon l'une quelconque des revendications précédentes, dans lequel la poudre de base poreuse est maintenue à une température inférieure à 0°C avant le frittage.

**7.** Procédé selon l'une quelconque des revendications précédentes, dans lequel le frittage est effectué dans une zone de frittage à travers laquelle passe une bande transporteuse transportant la poudre de base.

**8.** Procédé selon la revendication 7, dans lequel la zone de frittage est à une température supérieure à -30°C, de préférence supérieure à -20°C.

**9.** Procédé selon l'une quelconque des revendications précédentes, dans lequel le gâteau fritté est passé à travers une zone de refroidissement avant la pulvérisation.

**10.** Procédé selon la revendication 9, dans lequel la zone de refroidissement est à une température inférieure à la température de la zone de frittage.

**11.** Procédé selon la revendication 10, dans lequel la zone de refroidissement est à une température inférieure à -10°C, de préférence inférieure à -20°C, encore plus préférablement inférieure à -30°C.

**12.** Procédé selon l'une quelconque des revendications précédentes, dans lequel la poudre de café instantané présente des particules ayant une taille supérieure à 0,5 mm, de préférence inférieure à 4 mm.

**13.** Procédé selon l'une quelconque des revendications précédentes, dans lequel la teneur en humidité de la poudre de café instantané après lyophilisation est de 0,5-5%.

**14.** Procédé selon l'une quelconque des revendications précédentes, dans lequel toutes les étapes sont réalisées dans un environnement de chambre froide en-dessous de 0°C.

**15.** Poudre de café instantané susceptible d'être obtenue par un procédé selon l'une quelconque des revendications précédentes.

**16.** Poudre de café instantané susceptible d'être obtenue par frittage à froid d'une poudre congelée par pulvérisation et poreuse d'un extrait de café comprenant une porosité de particule d'au moins 35%, un volume de pore de cristaux de glace inférieur à 2,5 mL/g et une taille de pore de cristaux de glace inférieure à 3 micromètres.

**17.** Poudre de café instantané frittée présentant une porosité de moussage d'au moins 35%, dans laquelle la poudre comprend des espaces vides de sublimation de glace.

**18.** Poudre de café instantané selon la revendication 17, qui présente un volume de pore de cristaux de glace inférieur à 2,5 mL/g, de préférence inférieur à 2,0 mL/g.

**19.** Poudre de café instantané selon les revendications 17 ou 18, dans laquelle les espaces vides de sublimation de glace présentent une dimension inférieure à 3 micromètres, de préférence entre 0,1 et 3 micromètres.

**20.** Poudre de café instantané selon l'une quelconque des revendications 17 à 19, qui comprend un diamètre de taille de pore moyen inférieur à 40 micromètres, de préférence inférieur à 25 micromètres.

**21.** Poudre de café instantané selon l'une quelconque des revendications 17 à 20, présentant un volume de pore ouvert entre 0,5-2,5 mL/g, de préférence entre 0,7-2,0 mL/g.

**22.** Poudre de café instantané selon l'une quelconque des revendications 17 à 21, qui comprend un facteur d'intervalle de distribution n inférieur à 4, de préférence inférieur à 1.

**23.** Poudre de café instantané selon l'une quelconque des revendications 17 à 22, présentant une masse volumique après tassement entre 100-300 g/L.

**24.** Poudre de café instantané frittée à froid comprenant des espaces vides de sublimation de cristaux de glace partout dans le volume des particules de poudre.

**25.** Procédé pour la préparation d'une boisson instantanée comprenant l'étape de reconstitution d'une poudre de café instantané selon l'une quelconque des revendications 15 ou 17 à 24 dans un liquide.

**26.** Procédé selon la revendication 25, dans lequel le liquide est de l'eau chaude.

**27.** Procédé selon l'une quelconque des revendications 25 ou 26, dans lequel au moins 3 mL de crème sont produits lors de la reconstitution dans un liquide.

FIG. 1

FIG. 2

## FIG. 3

## FIG. 4

FIG. 5

FIG. 6

FIG. 7

FIG. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6713113 A
- US 4830869 A
- US 4903585 A, Wimmers
- US 4618500 A
- US 3749378 A
- EP 0839457 B1
- US 6497911 A
- US 5089279 A
- US 4394395 A
- US 3592659 A
- US 3573060 A
- DE 19750679, Windhab
- US 3670520 A, Bonteil
- WO 2005105253 A
- US 60976229 B